# EUROPEAN PATENT SPECIFICATION

(11) **EP 0 988 539 B1**
(45) Date of publication and mention of the grant of the patent: **19.02.2003**
(21) Application number: 98928035.9
(22) Date of filing: 11.06.1998
(51) Int. Cl.: G01N 29/14

(54) **METHOD AND APPARATUS FOR MONITORING OF TENSIONED CABLES**
VERFAHREN UND VORRICHTUNG ZUR ÜBERWACHUNG VON GESPANNTEN KABELN
PROCEDE ET APPAREIL DE CONTROLE POUR CABLES TENDUS

(30) Priority: 11.06.1997 CA 2207563; 25.05.1998 CA 2238566
(43) Date of publication of application: 29.03.2000
(73) Proprietor: PURE TECHNOLOGIES LTD, Calgary, Alberta, T2R 0E3 (CA)
(72) Inventor: PAULSON, Peter, O., Calgary, Alberta T2V 4M7 (CA)
(74) Representative: Becker, Thomas, Dr., Dipl.-Ing.
(86) International application number: CA9800575
(87) International publication number: WO98057166

(56) References cited:
- EP-A- 0 415 848
- EP-A- 0 482 750
- US-A- 5 456 113
- OKOROAFOR E U ET AL: "RELATING ACOUSTIC EMISSION SIGNAL PARAMETERS TO THE STRENGTH OF FIBRES USED IN THE MANUFACTURE OF POLYMERIC COMPOSITES" ULTRASONICS, vol. 33, no. 2, 1 March 1995, pages 123-131, XP000511383

## Description

### Field of the Invention

The invention relates to the detection of breakage or slippage of wires forming part of cables under tension, which wires form part of structural cables.

### Background of the Invention

Suspension cables are widely used as structural elements in bridges and the like. For example, a suspension bridge or support for carrying a pipeline across an obstacle such as a river typically will have at least one suspension cable. This is anchored at both sides of the gap to be traversed, and crosses the gap in a catenary curve, usually between two pylons or the like. Vertical cables of smaller diameter (called suspender ropes) are looped over the main catenary suspension cable, and these suspender ropes extend downwards to support the roadway or pipeline to be carried across the gap. A typical suspension bridge has two main suspension cables, but a pipeline may have only one.

Tensioned cables are also used in other forms of construction. For example, buildings are sometimes built with a central pylon, and tensioned cables run down to the ground to make a tent-like structure or else hang suspended concrete slab floors from the pylon. Buildings which need large floor areas without columns or walls, such as arenas or hangers, often have roofs supported by tensioned cables. Bridges known as cable-stay bridges have one or more pylons along their length, with inclined tensioned cables running from the pylons to support the roadbed.

In many cases tensioned cables are exposed to the elements. This is particularly the case in bridges and the like, where the cables are totally unprotected (except for whatever paint or anti-rust coating is placed on them). Bridges are also are frequently in high corrosion environments, such as near salt water.

Cables of the type used in a large suspension bridge are bundles of smaller wires. A typical wire has a diameter of approximately 0.1 - 0.2 inch (4-5 mm. approx.) A cable is frequently formed of 10,000 or more of such wires clustered together. Typically, the cable is formed with a circular cross section, although other cross sections are also used. Typically, also, the wires are not twisted together, but are laid parallel to each other. Main suspension cables in suspension bridges are surrounded at intervals by clamps known as "bands" which clamp the wires together to ensure that the wires do not separate, and also serve as the point from which smaller diameter cables known as suspender ropes are hung from the main cable. Cables may have the spaces between wires filled with grease or the like and may have their surfaces covered or protected in some way to protect the wires from corrosion.

At each end of each catenary suspension cable of a typical suspension bridge, it is anchored to the ground in a cable anchorage, where groups of wires are splayed apart and anchored separately. The groups of wires are clamped in anchor structures filled with potting metal, to prevent moisture and the like from attacking the ends of the wires. Similarly, other tensioned cables often end in sockets filled with poured zinc, and may have wedged anchors. The generic term "anchorage" will be used in this disclosure to indicate the place where the end of a tensioned cable is secured. The term "clamp" will be used to indicate anything which holds a cable, such as an anchorage or a band.

Individual wires in a cable may break from corrosion at any point along the cable. There is also breakage due to fretting of wires together, which usually occurs within the anchorages, especially if the wires have not been immobilized with respect to one another by the use of potting metal. Even when potting metal is present, some fretting may occur.

There is also another problem which occurs around the anchorages or bands, which is slippage of some wires within the band or anchorage.

Various methods have been used to attempt to inspect cables for breakage. Visual inspection is of course possible, as by moving a television camera along the cable, but this shows only the state of the external cladding of the cable, not the individual wires. Wires inside the cable bundle cannot be seen, and therefore their state cannot be ascertained. It has been known to spread the cable for a short period of time in one or more selected locations using a sledge hammer and a wedge, so as to be able to inspect visually the wires inside the cable. However, this requires the inspector to approach the cable in the place where inspection is to be done. This can be very difficult, as many portions of the cable are suspended in mid air.

Some indication of the state of the interior wires of the cable bundle can be obtained by moving a magnet along the cable to determine whether there are magnetic anomalies, but this does not provide accurate or detailed information as to broken wires. It has also been proposed (as in U.S. patent 5 456 113 of Kwun et al) to use passive or active monitoring of acoustic emissions by sending their magnetostrictive effects in order to determine wire breakage, but this proposal has not found practical application, so far as is known to applicant. The Kwun patent does, however, show monitoring of tensioned cables by positioning a plurality of magnetostrictive sensors along the cable at known locations and monitoring them for signals, noting the relative time of arrival of a signal sensed by such magnetostrictive sensors at at least two locations, and determining, from the relative arrival times of such signals at such sensors, the location along the cable of the origin of the signal.

European patent application 0 415 848 (Coflexip S.A. and Institut Francais Ancis du Petrole) shows a method of monitoring armoured cables or pipes, by detecting ultrasonic waves emitted by the cable or the flexible pipe, to identify signals caused by the rubbing together of adjacent armoured wires. Such arrangement can have several sensors disclosed around the circumference of a pipe or cable. However, there is no use of the sensors to determine the development length of a wire within a structural cable, nor is there any attempt to determine from what portion of the interior of the cable any sound comes. Instead, the detectors merely are present to determine the presence or absence of friction. More than one detector is used because the high frequencies being listened to have a very short propagation range, and also to permit an active system where one of the sensors at least is both a transducer and a receptor, so that it will emit a sound that the others can receive. No analysis of the signal to determine where it came from appears to take place, but only an analysis to find whether it represents wearing. Indeed, all of the detectors are put into a single zone where the most wear is expected to occur. See the disclosure at column 10, line 47 - column 11, line 20.

European patent application 0 482 750 (Stresswave Technology Limited and Rolls Royce & Associates Limited) deals with a method for locating the source of an acoustic emission where there are at least three spaced transducers, by having measuring means to measure the time taken for the electrical output signals of each of the transducers to exceed at least two predetermined amplitudes, and means to analyze in order to infer a mathematical relationship between the values of time for each of the electrical output signals and the location of a source of acoustic emission for a series of signals of known location, and obtaining a mathematical relationship which then permits the calculating of the calculation of the location of the source of an unknown signal.

Monitoring of the acoustic waves from wire breakage has also been known. See for example J.R. Woodward "Wire Breakage", Wire Industry, July 1969, p. 401. Indeed several bridges in France have been monitored for years to determine wire breakage. See Robert, J-L et al, "Surveillance acoustique des cables", Bull. Liaison Lab. Fonts Chauss. No. 169, art.3474 (Sept-Oct 1990). However, the system used requires smart sensors with a power supply, which greatly limits the flexibility and usefulness of the technique.

### Summary of the Invention

The present invention provides a method and apparatus for monitoring of a cable which registers breakage of wires as it occurs, and gives the location of such breakage. In many cases, it registers slippage of the cable through a clamp, for example through a cable anchorage. The method and apparatus of the invention can also register breakage of a wire in a cable which is directly or indirectly in physical contact to the cable being monitored, such that an acoustic wave can propagate from the breakage to the cable being monitored. The method is non-destructive, and does not require inspectors to go into normally inaccessible locations.

According to the method, acoustic sensors are located at longitudinally spaced points along the cable. The acoustic sensors are monitored, and sounds made by breaking wires are identified. The locations of the breaking wires along the cable are determined by noting the arrival times of such sounds at different longitudinally spaced sensors, and calculating the location of origin of such sounds from the difference in arrival times.

In a further aspect, cable slippage in a clamp is determined by positioning at least one acoustic sensor on or adjacent to adjacent to a clamp, and noting the sounds made by slippage.

The acoustic sensors according to the invention have very high electrical resistance of at least 10 megohms and are joined to a central processing station by shielded lines, for example coaxial cable with electrically shielded junction boxes. A charge amplifier is used at the central controller to boost the signal received from the sensors. The charge amplifier has a load resistance which is at least an order of magnitude below that of the sensors. The sensors are preferably accelerometers.

In a further aspect, multiplexing means are provided to reduce the number of cables required to monitor a large number of sensors, and a multiplexing method is disclosed to identify from which sensor the sounds come. In an alternate embodiment, sensors provide identifying information when they transmit a sound, so that the sensor which transmits the sound can be identified.

### Brief Description of the Drawings

Figure 1 is a plan view of a suspension bridge, showing one of the main suspension cables, suspender ropes and the apparatus of the invention in a typical arrangement.
Figure 2 is a plan view on a larger scale than Figure 1, of an anchorage for the end of a suspension cable of a suspension bridge, and illustrating a sensor according to the invention and a data acquisition device.
Figure 3 is a diagrammatic view showing one method of connecting sensors electrically to the data acquisition device.

### Description of the Invention

### (i) Longitudinal location of cable breakage along the Cable

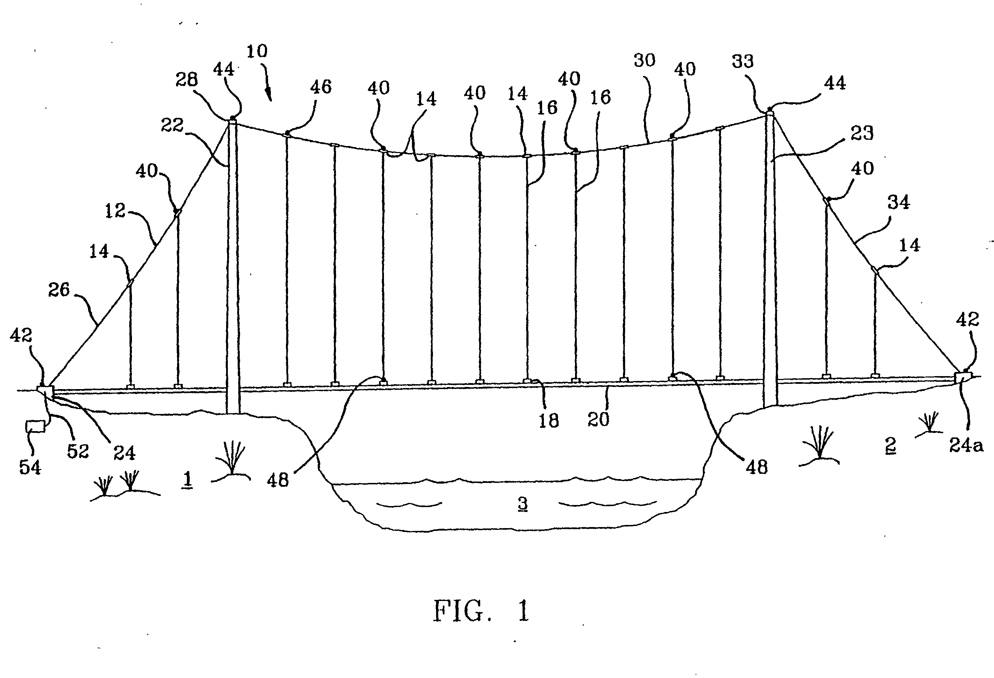

Turning to Figure 1 of the drawings, 10 is a suspension bridge which runs from land mass 1 to land mass 2 over water indicated as 3. The bridge has two vertical pylons 22, and a roadway 20.

The roadway 20 is suspended from two suspension cables, which are slung between the two pylons 22, 23 and attached to the ground either side of the water 3. Only one of these suspension cables is shown. The other one (which would lie directly behind it in the illustration) is identical.

The suspension cable 12 has a first portion 26, which runs between a cable anchorage 24 and a clamp 28 on the top of pylon 22. The second portion 30 is suspended between clamp 28 on pylon 22 and clamp 33 on the top of pylon 22. A fourth portion 34 descends from clamp 23 to cable anchorage 24a..

At intervals along cable 12 are bands 14, from which suspender ropes 16 (which are wire ropes) are suspended. The suspender ropes terminate in hangers 18, which support transverse cables (not shown) on which the roadway 20 is built. The anchorages 24, 24a, the hangers 18 and the bands 14 constitute nodes according to the teaching herein.

According to the invention, sensors 40, 42, 44, 48 are placed at selected nodes on the bridge. For example, sensors 40 are placed on every second band of the segment 30 of cable 12, except that one node which would otherwise have a sensor 40 has instead sensors 46, which will be described later. There are also sensors 40 on some but not all of the wire ropes 16 which intersect with segments 26 and 34 of cable 12. Other sensors, indicated as 42, are placed at the cable anchorages at both ends of cable 12. Still other sensors 44 are placed on bands 28 and 33, which are on pylons 22 and 23 respectively.

A few sensors 48 are also placed on selected ones of the hangers 18 which join the suspender ropes to road-supporting cables.

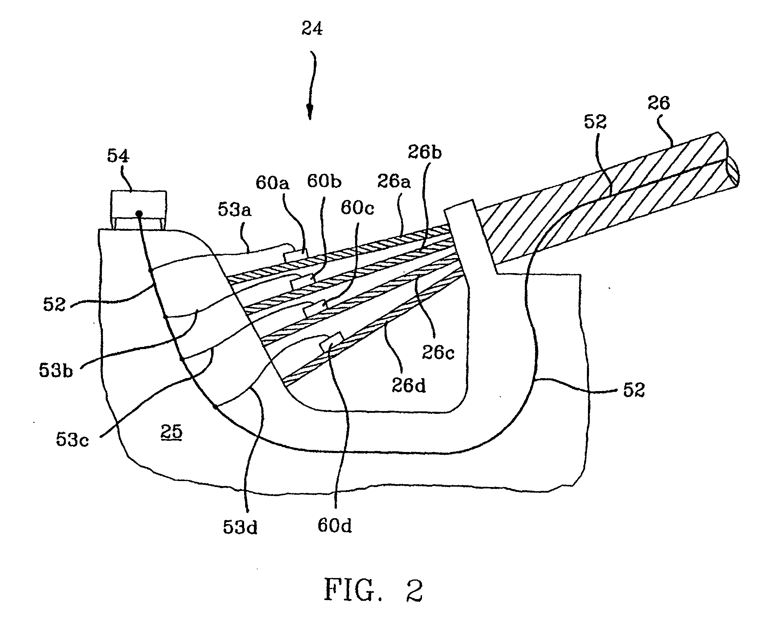

Figure 2 shows, in schematic form, detail of the anchorage 24. Anchorage 24 has an anchor 25. Cable 26 is splayed into groups of wires 26a, 26b, 26c and 26d, each of which passes into anchor 25 where it is anchored by conventional anchor means (not shown). Although only four such groups are shown a typical cable is splayed into many more than four. The splayed end of the cable terminates in the anchor means and is usually protected against corrosion by being potted into potting metal or otherwise mobilized and protected from moisture.

Placed at a convenient location on the splayed groups of wires are sensors 60a, 60b, 60c and 60d, one for each group of wires.

Sensors 60a, 60b, 60c and 60d may be attached to the associated groups of wires in any suitable way such as by gluing with a suitable adhesive or attaching it with a small clamp. Where the groups of wires have been painted or wrapped with a protective material, it is usually found not to be necessary to remove the paint or wrapping, as acoustic signals will travel through the paint or wrapping to the sensor without substantial distortion.

Sensors 60a ...60d convert acoustic signals which they receive to electrical signals, which are transmitted by cables 53a...53d to a trunk cable 52 and thence to a recording and processing location 54. Location 54 may be (for example) a recording means to record the signals for later transmission to a central office for analysis, or a computer at which the signals are analyzed. Although recording/analyzing means 54 is shown as located close to anchor 25, it need not be in this location. Instead, it can be in any convenient place where it can receive signals by means of cables such as cable 52. Alternately, it can receive signals propagated to it by radio or infrared linkages from all or some of the sensors, if this is desired.

The acoustic sensors 40, 42,44, 48 and 60a..d can be accelerometers or microphones having a resistance over 10 megohms. A microphone records the sound, or an accelerometer measures the deflection of the surface of the cable, as an acoustic or other wave propagates through the cable.

The sensors are preferably accelerometers having a resistance of over 50 megohms. A particularly preferred detector is a piezoceramic disc having a resistance of about 100 megohms.

It is known that accelerometers often provide a signal which is distorted by having a maximum at a particular frequency, and a lesser response at other frequencies. Therefore, all of the sensors in any single installation are preferred to be of the same type, so that all will provide signals which are distorted similarly. If desired, the central data collection location 54 can be equipped with means to correct the expected . distortion of the type of accelerometer used. However, if all sensors distort similar frequencies in similar predictable ways, it may be suitable not to correct the distortion, but merely to use and compare the distorted signals.

Sensors are placed in acoustic contact with the location to be monitored. This means that they must be able to pick up an acoustic event, such as a wire breakage, happening in the cable. If the cable is painted or covered with a wrapping, it is usually sufficient to place the sensors on top of the paint or wrapping, and to glue them to the cable. It is also sufficient in most cases to glue or clamp them to clamps surrounding the cable. The sufficiency of the acoustic contact can be verified by inducing an acoustic event (as for example by striking a clamp or cable with a sledge hammer in a location near the sensor) and verifying that the acoustic event caused by such striking is sensed by the sensor.

The sensors are connected to the central data collection location 54 by a shielded cable network. The shielding is to reduce or prevent noise which would otherwise prevent the signal from being distinguished when received at the data collection location. Shielding can be accomplished by using coaxial cable, with each connection between a cable and a sensor, amplifier or other cable being made in a junction box protected by a Faraday cage.

At the data collection location, a charge amplifier (contained within data collection location 54) compares the voltage of the input with the voltage of a reference, and provides an amplified output. A load resistance, which is smaller than the resistance of the sensors by at least about an order of magnitude, is associated with the charge amplifier. Suitably, the load resistance is 1 megohm. The charge coupled device itself has a resistance considerably higher than this.

The signals of interest to be detected by the sensors when a wire break or slippage occurs are typically 4 KHz or above, and usually above 8 KHz. Therefore, at the frequencies of interest, the system is of very high impedance, and the impedance is substantially resistive. Thus, for practical purposes, impedance can be considered merely by considering the resistance of the components.

In this system, the signal is transmitted to the data collection location in analogue form, without an amplifier located at each sensor. This reduces the cost of the apparatus required from that of the prior art, and makes it unnecessary to have a power supply or batteries at each sensor. Surprisingly, it is found that an acceptable signal can be transmitted a distance long enough to permit instrumentation using this arrangement for even long bridges. In one test, unamplified signals from a piezoelectric ceramic disc were successfully transmitted along a coaxial cable 8000 ft. (approx. 2440 m.) in length and successfully amplified.

As each sensor is of a much higher resistance (and hence impedance) than the load resistor, additional sensors can be added in series to those already there without substantially affecting the overall system impedance. This has the advantage that large numbers of sensors (e.g. 100 or so) can be strung together in series and connected to a single data collecting channel (for example the co-axial cable shown as 52. )

The use of high resistance/impedance devices also makes the data collection system very resistant to damage from lighting strikes.

In a preferred embodiment of the invention, sensors are located at or near cable nodes. A cable node is defined as a place where two cables intersect and are directly or indirectly connected in a way that transmits acoustic energy from one to the other without significant damping. (as for example where a band joins a suspension cable to a suspender cable) or a place where a cable end is clamped to another structure (as for example where a catenary cable is anchored at a end in a cable anchorage or where a suspender rope is secured in a hanger where a cable stay is anchored in a poured zinc socket.).

It is not necessary to place a sensor at every node, provided that the sensors are sufficiently close to one another so that a wire break will be sensed by at least two sensors. The effective distance over which this can be done depends on the attenuation of acoustic signals within the cable and the information which is sought. For example, in a suspension bridge, where only monitoring of a catenary suspension cable is desired, a sensor can be placed for example on every second one of the nodes where a suspender cable is hung from the suspension cable, as is shown at 40 on span 30. The signals will propagate through the intervening nodes, and will be received at the sensors, provided that the distance between them is not far enough for attenuation of the signal to a level where it cannot be recognized. However, if there is a wire break in the suspender rope attached to the intervening node, such an arrangement may not provide sufficient information about such break for complete characterization of it.

The speed of sound in the cable is usually a known quantity, but if desired it can be measured by propagating an acoustic wave through the cable (as for example by hitting the cable with a pneumatic hammer) and determining the time taken for the acoustic wave to pass along the cable between two sensors a known distance apart.

When a wire breaks, it causes an acoustic event, and sends acoustic and pressure waves in both directions along the cable. These will hereinafter be called acoustic waves and the sensors for them will be called acoustic sensors, it being understood that the waves pass through the cable and that the sensors can either pick up sound (as by a microphone in close proximity to the cable) or vibrations in the cable itself (as by a piezoelectric transducer located on a cable band or the outer surface of the cable.). Thus, the location of the break can be determined by measuring the difference in the length of time that is taken for the signal from the breakage to reach the first sensor on either side of the breakage, and by knowing the distance between the two sensors. It is preferred that there be a sensor at or near any node which is the termination of the cable being monitored, so that the location of breakages near the cable end can be determined accurately.

Where the cable passes through a node (for example if the cable is a catenary suspension cable and the node is the point where a vertical suspender rope passes over it) the signal will propagate through the node. Thus, where monitoring a cable which continues through a node, it is not necessary to have a sensor at that node. However, it is preferred to have sensors at each node, as such sensors will acquire useful information as discussed hereinafter about wire slippage and the nature of the event causing the signal.

It is found that acoustic waves attenuate fairly rapidly in cables.. The degree of attenuation appears to depend on the size and nature of the cable. For example, in a catenary suspension cable of 2'(approx. 0.6m.) diameter having 10000 parallel wires of 0.2" (approx. 0.78 cm.) diameter and bands spaced every 40' (approximately 12.2 m.), attenuation was approximately 12 db between sensors on adjacent bands. Sensors must be placed close enough to one another, having regard to cable size, composition and spacing of bands, so that useable signals can be obtained from at least two sensors if a wire break is to be located. Wire slippage within a node gives generally a signal of much lower amplitude than wire breakage, so generally, it is desirable to have at least one sensor on each node where slippage is suspected.

Tests can be conducted with the particular cable to show the nature of the acoustic event produced by a wire breakage, so that such event can be recognized and distinguished from other acoustic events which may cause acoustic waves within the cable. Also, once an event is recognized as a likely wire break, the record of other acoustic events immediately before it can be reviewed to see if a likely cause can be determined. For example, the acoustic waves caused by sawing are recognizable, and a sawing sound immediately preceding a wire break indicates vandalism. On a bridge, such a sequence could be used to trigger an alarm to send personnel to catch the vandal or to scare the vandal away to prevent further damage.

Where a cable is has sufficient sensors (such as for example at its nodes) to enable the location of wire breaks to be determined with some accuracy, it is possible to use this information to determine the replacement schedule for that cable.

On a suspension bridge, it is not necessary to put a sensor or a group of sensors at every node where a suspender rope intersects a catenary cable. Sensors on the catenary suspension cable will identify wire breakage in vertical cables which pass over bands on that catenary cable, as the waves is transmitted to the catenary cable through the band. Such information will tell where along the catenary cable the waves were transmitted to the catenary cable. For a particular cable, the transmission of a wave caused by wire breakage in a suspender rope to that cable through the bands will have a particular signature waveform which can be distinguished from that of a wire breakage in the cable itself. However, the location at which the wave was transmitted to the cable can be located in like manner as if there had been a wire break at that place. This permits determination of which of the vertical cables has had a wire break. It is useful to know how many wire breaks have occurred in a particular vertical cable, whether or not the precise locations of these wire breaks can be determined. After a certain number of wire breaks are known to have occurred in a particular vertical cable, it may be decided to replace that vertical cable, even though the precise locations of the wire breaks are not known, or it may be desired to put sensors on that vertical cable.

### (ii) Collecting the Signals

The use of at least one sensor at each node requires the use of a large number of sensors on a large structure, such as a long suspension bridge. There must be means for the sensors to transmit signals which they have sensed to a recording device.

A first embodiment of signal collection has a common data line 52 for a group of sensors, with each sensor on the line having means (not illustrated) for generating a unique identifier signal. The means, which may be operated by a small battery located at the sensor, generates a signal unique to that sensor a predetermined amount of time after the sensor has sent a signal of greater than a desired preset magnitude. This permits the data recording device to distinguish between signals from different sensors.

In another embodiment of signal collection, there is a plurality of data channels. Each longitudinally spaced location where sensing is required has two electrically independent sensors attached to different channels. The connections are such that each sensing location has its two sensors attached to a unique pair of channels. As an event at the sensing location triggers both sensors, a signal received on any two channels defines the sensing location (e.g. a node) from which the signal has come.

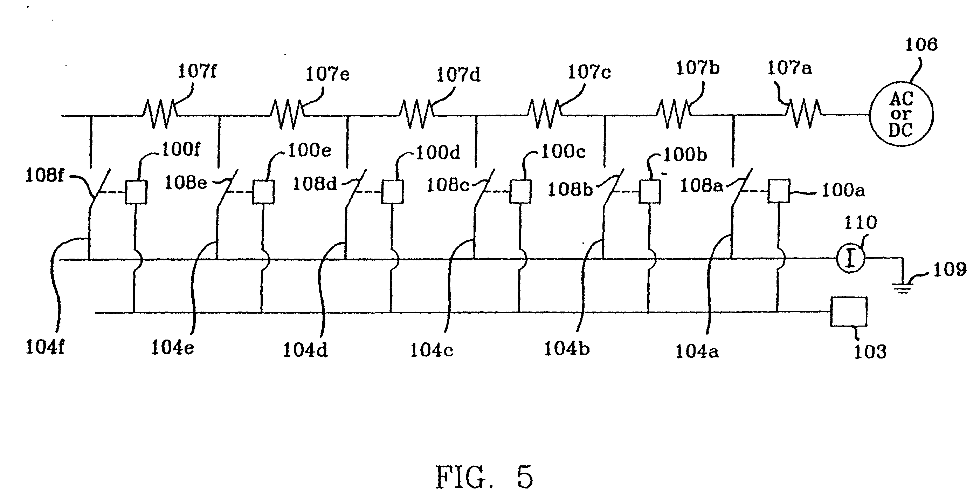

A third embodiment of data collection is illustrated in Figure 3 Figure 5 shows a plurality of sensors 100a....100f. Each has a connection 101 a... 101 f to a data channel 103 which leads to data collection device 103. Each also has a connection 104a...104f to a locator circuit 105. The locator circuit is an open circuit connected to a source of AC or DC power 106. It has a series of known resistors 107a...107f, each of which is associated with a sensor as shown. Each sensor also has an open switch (108a...108f) which will complete the open circuit if closed.

When a sensor (e.g..100e) is triggered by an acoustic event of greater than a preset magnitude, it causes its switch (108e) to close, completing the circuit. This causes the known voltage 106 to flow through circuit 105 to ground 110, causing a current to register in ammeter 110. The current will depend on how many of the resistors 107a...107f have been traversed by the current. In this case resistors 107a to 107e are traversed, but not resistor 107f.

The values of the resistors 107a...107f are chosen so that the total resistance of the locator circuit has a different value depending on which sensor has sent data. The amount of current therefore shows which sensor sent the data. The sensor which sent the data then opens its circuit after a predetermined interval so that the process can be repeated as has been described. The unique value of the current indicates which sensor has been triggered.

Instead of starting with all switches open, and having a sensor close its associated switch when triggered, it is of course possible to start with all switches closed, and have a sensor open its associated switch when triggered, or to start with some known combination of open and closed switches ,and have the sensor change the state of its associated switch when triggered.

This embodiment is only preferred, however, in situations where the sensors connected to the common data channel are spaced sufficiently far apart that they will not receive signals from the same wire break. Thus, for example, when this arrangement is used with longitudinally spaced sensors, there maybe for example four data channels, with each fourth sensor being connected to the same channel, provided that the degree of attenuation in this cable is such that the waves are unlikely to affect more than one sensor on a data channel.

Where it is likely that an acoustic event will trigger more than one sensor on a channel, the resistances can be set so that every combination of a single resistor, or two or more resistors, gives rise to a unique total resistance. It is thus possible to distinguish a situation where two sensors have given signals on the same channel. Initially, one distinctive current be registered, which will correspond (for example) to a signal being registered by sensor 100d, causing the closing of its switch 108d. Then, as the acoustic wave propagated in one direction along the cable, sensor 100e may receive it, causing closing of its switch 108e and a change in current. Still later, sensor 100c may receive the waves passing in the other direction along the cable, closing switch 108c and again changing the current value. The time at which each of the current changes occurs shows when the pulse of acoustic waves from the event reached each of the sensors. If desired, it is possible to do away with the data channel completely, and merely rely on the changes in current to show when a wavefront has reached each sensor. However, this is not preferred, as the acquisition of the data from the sensors is useful for further analysis to determine whether a signal is from a wire break.

While the above description shows preferred embodiments of the present invention, it is to be understood that the invention is not limited thereby and that in light of the present disclosure of the invention, various other alternative embodiments will be apparent to persons skilled in the art. Accordingly, it is to be understood that changes can be made without departing from the scope of the invention as particularly pointed out and distinctly claimed in the claims set forth below.

## Claims

1. A method of monitoring a tensioned cable (12) which comprises:
(a) positioning a plurality of acoustic sensors at known locations along the cable (40, 42, 44, 48), each of said acoustic sensors having an electrical resistance of at least 10 megohms and being of a type which gives an electrical voltage as output upon sensing an acoustic signal;
(b) attaching said sensors to at least one electrically shielded electrically conductive data collecting channel (52) so that voltage output from the sensors will cause a voltage in at least one such channel;
(c) attaching said electrically conductive data collecting channel (52) to a data collection station (54) having a charge amplifier with an electrical load resistance which is at least an order of magnitude below the electrical resistance of any of the sensors;
(d) reading the voltage in said channel (52) at said data collection station (54) said voltage in the channel having been amplified by said charge amplifier;
(e) noting from voltage outputs of sensors at two or more locations the relative times of arrival of an acoustic signal at said sensors (40, 42);
(f) determining, from the relative arrival times of said acoustic signal at said sensors at two or more locations, the location along the cable of the origin of the signal.

2. A method as claimed in claim 1 as claimed in claim 1, including the step of identifying the voltage output in a said electrically conductive data collecting channel (52) as having come from a sensor at a particular location.

3. A method as claimed in claim 2 in which the step of identifying a voltage output as coming from a sensor at a particular location includes the step of associating the voltage output with an identifier signal unique to a sensor at that location.

4. A method as claimed in claim 2, in which the step of identifying a voltage output as coming from a sensor at a particular location includes the step of having two sensors at each location, the two sensors at each location providing electrical output to different data channels, the different data channels forming a unique pair for each location.

5. A method as claimed in claim 2, in which the step of identifying a voltage output as coming from a sensor at a particular location includes the steps of:
(i) providing a circuit with a power source and a plurality of resistors, each resistor being associated with a sensor; and
(ii) providing a switch associated with each sensor, so that the switch is actuated when an acoustic signal is received at said sensor; and the switch causes a current to flow through the circuit,
the values of the resistors being chosen so that the actuation of the switch associated with any particular sensor causes the flow of a current of unique amperage.

6. A method as claimed in any of claims 1 - 5, in which the sensors are arranged to sense acoustic events in a suspension cable (12) of a suspension bridge, and at least one of said known locations is on a bend (14) where a suspender rope (16) is hung fom said cable.

7. A method as claimed in any of claims 1 - 6, in which the sensors are accelerometers.

8. A method as claimed in any of claims 1 - 6, in which the sensors are microphones.

9. Apparatus for monitoring a tensioned cable (12) which comprises:
(a) a plurality of acoustic sensors located at known locations along the cable (40, 42, 44, 48), each of said acoustic sensors having an electrical resistance of at least 10 megohms and being of a type which gives an electrical voltage as output upon sensing an acoustic signal;
(b) an electrically shielded conductive data collecting channel (52) to which the sensors are connected so that voltage output from the sensors will cause a voltage in the channel;
(c) a data collection station (54) having a charge amplifier with an electrical load resistance which is at least an order of magnitude below the electrical resistance of any of the sensors, said data collection station being connected to the data collecting channel (52):
(d) means for reading the voltage in the channel (52) at said data collection station (54), said voltage in the channel having been amplified by said charge amplifier,
(e) timing means to record the voltage and time, whereby to determine the relative times of arrival of an acoustic signal at two acoustic sensors (40, 42); and
(f) calculating means for determining, from the relative arrival times of said signal at said two sensors, the location along the cable of the origin of the signal.

10. Apparatus as claimed in claim 9, including means to identify the voltage output in said electrically conductive data collecting channel (52) as having come from a sensor at a particular location.

11. Apparatus as claimed in claim 10 in which the means to identify the voltage output as coming from a sensor at a particular location includes the step of associating the voltage output with an identifier signal unique to a sensor at that location.

12. Apparatus as claimed in claim 10, in which the means to identify a voltage output as coming from a sensor at a particular location includes two sensors at each location, the two sensors at each location providing electrical output to different data channels, the different data channels forming a unique pair for each location.

13. Apparatus as claimed in claim 10, in which the means to identify a voltage output as coming from a sensor at a particular location includes:
(i) a circuit with a power source and a plurality of resistors, each resistor being associated with a sensor; and
(ii) a switch associated with each sensor, so that the switch is actuated when an acoustic signal is received at said sensor; and the switch causes a current to flow through the circuit,
the values of the resistors being chosen so that the actuation of the switch associated with any particular sensor causes the flow of a current which is different from the current which is caused to flow by the closing of the switch associated with any other sensor.

14. Apparatus as claimed in claims 9 - 13, in which the sensors are arranged to sense acoustic events in a suspension cable (12) of a suspension bridge, and at least one of said known locations is on a band (14) where a suspender rope (16) is hung from said cable.

15. Apparatus as claimed in any of claims 9 - 14, in which the sensors are microphones.

16. Apparatus as claimed in claims 9 - 14, in which the sensors are accelerometers.

17. A method as claimed in any of claims 1 - 8, in which the sensors are in acoustic contact with the locations to be monitored.

18. Apparatus as claimed in any of claims 9 - 16, in which the sensors are in acoustic contact with the locations to be monitored.

## Patentansprüche

1. Verfahren zur Überwachung eines gespannten Kabels (12), das Folgendes umfasst:
(a) Positionieren einer Vielzahl von akustischen Sensoren an bekannten Stellen entlang des Kabels (40, 42, 44, 48), wobei jeder dieser akustischen Sensoren einen elektrischen Widerstand von mindestens 10 Megohm aufweist und von jener Art ist, die beim Erfassen eines akustischen Signals eine elektrische Spannung ausgibt;
(b) Befestigen der Sensoren an mindestens einem elektrisch abgeschirmten elektrisch leitenden Datensammelkanal (52), so dass die Spannungsausgabe aus den Sensoren in mindestens einem der Kanäle eine Spannung verursacht;
(c) Befestigen des elektrisch leitenden Datensammelkanals (52) an eine Datensammelstation (54), die einen Ladungsverstärker mit einem elektrischen Belastungswiderstand aufweist, der mindestens eine Größenordnung unterhalb des elektrischen Widerstands von einem beliebigen der Sensoren liegt;
(d) Ablesen der Spannung im Kanal (52) bei der Datensammelstation (54), wobei die Spannung im Kanal durch den Ladungsverstärker verstärkt worden ist;
(e) Erfassen der relativen Ankunftszeiten eines akustischen Signals bei den Sensoren (40, 42) an Hand der Spannungsausgänge der Sensoren an zwei oder mehr Stellen;
(f) Erfassen der Stelle des Signalursprungs entlang des Kabels, ausgehend von den relativen Ankunftszeiten des akustischen Signals an den Sensoren an zwei oder mehr Stellen.

2. Verfahren nach Anspruch 1, einschließlich des Schrittes, mit dem die Spannungsausgabe im elektrisch leitenden Datensammelkanal (52) als Spannungsausgabe identifiziert wird, die von einem Sensor an einer bestimmten Stelle kommt.

3. Verfahren nach Anspruch 2, wobei der Schritt, mit dem eine Spannungsausgabe als Spannungsausgabe identifiziert wird, die von einem Sensor an einer bestimmten Stelle kommt, den Schritt einschließt, durch den die Spannungsausgabe mit einem Identifizierungssignal in Verbindung gebracht wird, das für einen Sensor an dieser Stelle einzigartig ist.

4. Verfahren nach Anspruch 2, wobei der Schritt, mit dem eine Spannungsausgabe als Spannungsausgabe identifiziert wird, die von einem Sensor an einer bestimmten Stelle kommt, den Schritt einschließt, durch den zwei Sensoren an jeder Stelle vorhanden sind, wobei die zwei Sensoren an jeder Stelle für verschiedene Datenkanäle elektrische Leistung bereitstellen, wobei die verschiedenen Datenkanäle für jede Stelle ein einzigartiges Paar bilden.

5. Verfahren nach Anspruch 2, wobei der Schritt, mit dem eine Spannungsausgabe als Spannungsausgabe identifiziert wird, die von einem Sensor an einer bestimmten Stelle kommt, folgende Schritte einschließt:
(i) Bereitstellen eines Kreises mit einer Leistungsquelle und einer Vielzahl an Widerständen, wobei jeder Widerstand mit einem Sensor verbunden ist; und
(ii) Bereitstellen eines Schalters, der mit jedem Sensor verbunden ist, so dass der Schalter aktiviert wird, wenn der Sensor ein akustisches Signal empfängt, und der Schalter bewirkt, dass Strom durch den Kreis fließt,
wobei die Werte der Widerstände so gewählt werden, dass die Aktivierung des Schalters, der mit einem der Sensoren verbunden ist, dazu führt, dass Strom mit einer einzigartigen Stromstärke fließt.

6. Verfahren nach einem der Ansprüche 1 bis 5, wobei die Sensoren angeordnet sind, um akustische Ereignisse in einem Hängekabel (12) einer Hängebrücke zu erfassen, und wobei sich mindestens eine der bekannten Stellen an einer Bindung (14) befindet, an dem ein Hängeseil (16) vom Kabel hängt.

7. Verfahren nach einem der Ansprüche 1 bis 6, wobei es sich bei den Sensoren um Beschleunigungsmesser handelt.

8. Verfahren nach einem der Ansprüche 1 bis 6, wobei es sich bei den Sensoren um Mikrofone handelt.

9. Vorrichtung zur Überwachung eines gespannten Kabels (12), das Folgendes umfasst:
(a) eine Vielzahl an akustischen Sensoren, die an bekannten Stellen entlang des Kabels (40, 42, 44, 48) angeordnet sind, wobei jeder der akustischen Sensoren einen elektrischen Widerstand von mindestens 10 Megohm aufweist und von jener Art ist, welche bei Erfassen eines akustischen Signals eine elektrische Spannung ausgibt;
(b) einen elektrisch abgeschirmten leitenden Datensammelkanal (52), an den die Sensoren angeschlossen sind, so dass eine Spannungsausgabe von den Sensoren eine Spannung im Kanal verursacht;
(c) eine Datensammelstation (54), welche einen Ladungsverstärker mit einem elektrischen Belastungswiderstand aufweist, der mindestens eine Größenordnung unterhalb des elektrischen Widerstands eines der Sensoren liegt, wobei die Datensammelstation mit dem Datensammelkanal (52) verbunden ist;
(d) Mittel zum Ablesen der Spannung im Kanal (52) an der Datensammelstation (54), wobei die Spannung im Kanal durch den Ladungsverstärker verstärkt worden ist;
(e) Zeitmessungsmittel zum Aufzeichnen der Spannung und der Zeit, um so die relativen Ankunftszeiten eines akustischen Signals bei zwei akustischen Sensoren (40, 42) zu bestimmen, und
(f) Berechnungsmittel, um - ausgehend von den relativen Ankunftszeiten des Signals bei den zwei Sensoren - die Stelle des Signalursprungs entlang des Kabels zu bestimmen.

10. Vorrichtung nach Anspruch 9, einschließlich Mittel, um die Spannungsausgabe im elektrisch leitenden Datensammelkanal (52) als eine solche zu identifizieren, die von einem Sensor an einer bestimmten Stelle gekommen ist.

11. Vorrichtung nach Anspruch 10, wobei die Mittel, mit denen die Spannungsausgabe als eine solche identifiziert wird, die von einem Sensor an einer bestimmten Stelle kommt, den Schritt einschließt, die Spannungsausgabe mit einem Identifizierungssignal in Verbindung zu bringen, das für einen Sensor an dieser Stelle einzigartig ist.

12. Vorrichtung nach Anspruch 10, wobei die Mittel, mit denen eine Spannungsausgabe als eine solche identifiziert wird, die von einem Sensor an einer bestimmten Stelle kommt, zwei Sensoren an jeder Stelle einschließt, wobei die zwei Sensoren an jeder Stelle für verschiedene Datenkanäle elektrische Leistung bereitstellen, wobei die verschiedenen Datenkanäle für jede Stelle ein einzigartiges Paar bilden.

13. Vorrichtung nach Anspruch 10, wobei die Mittel, mit denen eine Spannungsausgabe als eine solche identifiziert wird, die von einem Sensor an einer bestimmten Stelle kommt, Folgendes einschließt:
(i) einen Kreis mit einer Stromquelle und einer Vielzahl an Widerständen, wobei jeder Widerstand mit einem Sensor verbunden ist, und
(ii) einen Schalter, der mit jedem Sensor verbunden ist, so dass der Schalter aktiviert wird, wenn der Sensor ein akustisches Signal empfängt, und wobei der Schalter bewirkt, daß ein Strom durch den Kreis fließt, wobei die Werte der Widerstände so ausgewählt werden, dass die Aktivierung des Schalters, der mit einem beliebigen der Sensoren verbunden ist, Strom zum Fließen bringt, der sich von jenem Strom unterscheidet, der durch das Schließen des Schalters, der mit einem der anderen Sensoren verbunden ist, zum Fließen gebracht wird.

14. Vorrichtung nach den Ansprüchen 9 bis 13, wobei die Sensoren so angeordnet sind, dass sie akustische Ereignisse in einem Hängekabel (12) einer Hängebrücke erfassen und wobei sich mindestens eine der bekannten Stellen an einer Bindung (14) befindet, an der ein Hängeseil (16) vom Kabel hängt.

15. Vorrichtung nach einem der Ansprüche 9 bis 14, wobei es sich bei den Sensoren um Mikrofone handelt.

16. Vorrichtung nach den Ansprüchen 9 bis 14, wobei es sich bei den Sensoren um Beschleunigungsmesser handelt.

17. Verfahren nach einem der Ansprüche 1 bis 8, wobei die Sensoren in akustischem Kontakt mit den zu überwachenden Stellen stehen.

18. Vorrichtung nach einem der Ansprüche 9 bis 16, wobei die Sensoren in akustischem Kontakt mit den zu überwachenden Stellen stehen.

## Revendications

1. Procédé de surveillance d'un câble tendu (12) qui comprend :
(a) le positionnement d'une pluralité de capteurs acoustiques à des emplacements connus le long du câble (40, 42, 44, 48), chacun desdits capteurs acoustiques ayant une résistance électrique d'au moins 10 MΩ et étant d'un type qui délivre une tension électrique en tant que sortie lors de la détection d'un signal acoustique ;
(b) la fixation desdits capteurs à au moins un canal d'acquisition de données électriquement conducteur et blindé électriquement (52) de sorte que la tension délivrée par les capteurs génère une tension dans au moins un tel canal ;
(c) la fixation dudit canal d'acquisition de données électriquement conducteur (52) à un poste d'acquisition de données (54) comportant un amplificateur de charge avec une résistance de charge électrique qui est au moins un ordre d'amplitude inférieure à la résistance électrique de n'importe lequel des capteurs ;
(d) la lecture de la tension dans ledit canal (52) au niveau dudit poste d'acquisition de données (54), ladite tension dans le canal ayant été amplifiée par ledit amplificateur de charge ;
(e) l'enregistrement, à partir des sorties de tension des capteurs à deux emplacements ou plus, des instants d'arrivée relatifs d'un signal acoustique au niveau desdits capteurs (40, 42) ;
(f) la détermination, à partir des instants d'arrivée relatifs dudit signal acoustique au niveau desdits capteurs à deux emplacements ou plus, de l'emplacement le long du câble de l'origine du signal.

2. Procédé selon la revendication 1, comprenant l'étape consistant à identifier la sortie de tension dans un canal d'acquisition de données électriquement conducteur (52) comme provenant d'un capteur à un emplacement particulier.

3. Procédé selon la revendication 2, dans lequel l'étape consistant à identifier une sortie de tension comme provenant d'un capteur à un emplacement particulier comprend l'étape consistant à associer la sortie de tension à un signal identificateur propre à un capteur à cet emplacement.

4. Procédé selon la revendication 2, dans lequel l'étape consistant à identifier une sortie de tension comme provenant d'un capteur à un emplacement particulier comprend l'étape consistant à disposer deux capteurs à chaque emplacement, les deux capteurs à chaque emplacement délivrant une sortie électrique à différents canaux de données, les différents canaux de données formant une paire unique pour chaque emplacement.

5. Procédé selon la revendication 2, dans lequel l'étape consistant à identifier une sortie de tension comme provenant d'un capteur à un emplacement particulier comprend les étapes consistant à :
(i) prévoir un circuit avec une source d'alimentation et une pluralité de résistances, chaque résistance étant associée à un capteur ; et
(ii) prévoir un commutateur associé à chaque capteur, de sorte que le commutateur soit actionné lorsqu'un signal acoustique est reçu au niveau dudit capteur et que le commutateur provoque la circulation d'un courant à travers le circuit,
les valeurs des résistances étant choisies de sorte que l'actionnement du commutateur associé à n'importe quel capteur particulier provoque la circulation d'un courant d'un ampérage unique.

6. Procédé selon l'une quelconque des revendications 1 à 5, dans lequel les capteurs sont agencés pour détecter des événements acoustiques dans un câble tendu (12) d'un pont suspendu, et au moins l'un desdits emplacements connus se trouve sur une bande (14) où une corde de suspension (16) est suspendue audit câble.

7. Procédé selon l'une quelconque des revendications 1 à 6, dans lequel les capteurs sont des accéléromètres.

8. Procédé selon l'une quelconque des revendications 1 à 6, dans lequel les capteurs sont des microphones.

9. Dispositif pour surveiller un câble tendu (12) comprenant :
(a) une pluralité de capteurs acoustiques situés à des emplacements connus le long du câble (40, 42, 44, 48), chacun desdits capteurs acoustiques ayant une résistance électrique d'au moins 10 MΩ et étant d'un type qui délivre une tension électrique en tant que sortie lors de la détection d'un signal acoustique ;
(b) un canal d'acquisition de données conducteur blindé électriquement (52) auquel les capteurs sont connectés de sorte que la sortie de tension provenant des capteurs génère une tension dans le canal ;
(c) un poste d'acquisition de données (54) comportant un amplificateur de charge avec une résistance de charge électrique qui est au moins un ordre d'amplitude inférieure à la résistance électrique de n'importe lequel des capteurs, ledit poste d'acquisition de données étant connecté au canal d'acquisition de données (52) ;
(d) des moyens pour lire la tension dans le canal (52) au niveau dudit poste d'acquisition de données (54), ladite tension dans le canal ayant été amplifiée par ledit amplificateur de charge ;
(e) des moyens de synchronisation pour enregistrer la tension et le temps, de manière à déterminer les instants d'arrivée relatifs d'un signal acoustique au niveau de deux capteurs acoustiques (40, 42) ; et
(f) des moyens de calcul pour déterminer, à partir des instants d'arrivée relatifs dudit signal au niveau desdits deux capteurs, l'emplacement le long du câble de l'origine du signal.

10. Dispositif selon la revendication 9, comprenant des moyens pour identifier la sortie de tension dans ledit canal d'acquisition de données électriquement conducteur (52) comme provenant d'un capteur à un emplacement particulier.

11. Dispositif selon la revendication 10, dans lequel les moyens pour identifier. la sortie de tension comme provenant d'un capteur à un emplacement particulier comprennent l'étape consistant à associer la sortie de tension à un signal identificateur propre à un capteur à cet emplacement.

12. Dispositif selon la revendication 10, dans lequel les moyens pour identifier une sortie de tension comme provenant d'un capteur à un emplacement particulier comprennent deux capteurs à chaque emplacement, les deux capteurs à chaque emplacement délivrant une sortie électrique à différents canaux de données, les différents canaux de données formant une paire unique pour chaque emplacement.

13. Dispositif selon la revendication 10, dans lequel les moyens pour identifier une sortie de tension comme provenant d'un capteur à un emplacement particulier comprennent :
(i) un circuit avec une source d'alimentation et une pluralité de résistances, chaque résistance étant associée à un capteur ; et
(ii) un commutateur associé à chaque capteur, de sorte que le commutateur soit actionné lorsqu'un signal acoustique est reçu au niveau dudit capteur et que le commutateur provoque la circulation d'un courant à travers le circuit,
les valeurs des résistances étant choisies de sorte que l'actionnement du commutateur associé à n'importe quel capteur particulier provoque la circulation d'un courant qui est différent du courant qui est amené à circuler du fait de la fermeture du commutateur associé à n'importe quel autre capteur.

14. Dispositif selon les revendications 9 à 13, dans lequel les capteurs sont agencés pour détecter des événements acoustiques dans un câble de suspension (12) d'un pont suspendu, et au moins l'un desdits emplacements connus se trouve sur une bande (14) où une corde de suspension (16) est suspendue audit câble.

15. Dispositif selon l'une quelconque des revendications 9 à 14, dans lequel les capteurs sont des microphones.

16. Dispositif selon les revendications 9 à 14, dans lequel les capteurs sont des accéléromètres.

17. Procédé selon l'une quelconque des revendications 1 à 8, dans lequel les capteurs sont en contact acoustique avec les emplacements à surveiller.

18. Dispositif selon l'une quelconque des revendications 9 à 16, dans lequel les capteurs sont en contact acoustique avec les emplacements à surveiller.
